# EUROPEAN PATENT SPECIFICATION

(11) **EP 3 257 801 B1**
(45) Date of publication and mention of the grant of the patent: **05.08.2020**
(21) Application number: 16174702.7
(22) Date of filing: 16.06.2016
(51) Int. Cl.: B66B 7/08

(54) **TERMINAL ARRANGEMENT AND ELEVATOR**
KLEMMENANORDNUNG UND AUFZUG
DISPOSITIF DE TERMINAL ET ASCENSEUR

(43) Date of publication of application: 20.12.2017
(73) Proprietor: KONE Corporation, 00330 Helsinki (FI)
(72) Inventor: Salmi, Markus, 00330 Helsinki (FI); Siironen, Tapio, 00330 Helsinki (FI); Kiuru, Antti, 00330 Helsinki (FI)
(74) Representative: Kolster Oy Ab

(56) References cited:
- EP-A1- 1 431 227
- WO-A1-2013/055308
- JP-A- 2007 210 731

## Description

### FIELD OF THE INVENTION

The invention relates to a terminal arrangement of a rope of an elevator. The elevator is preferably an elevator for vertically transporting passengers and/or goods.

### BACKGROUND OF THE INVENTION

In elevators, one or more ropes are used as the means by which the load to be hoisted is suspended. Each rope end needs to be fixed to a fixing base, which is typically either the load to be lifted or a stationary structure, depending on the type of suspension chosen for the elevator. The rope ends can be fixed directly to the load, such as the car or counterweight, which is the case when these are to be suspended with 1:1 ratio. Alternatively, the rope ends can be fixed to a stationary structure of the building, which is the case when the car and counterweight are to be suspended with 2:1 ratio, for instance.

In prior art, elevator ropes have been fixed to the fixing base with a rope terminal arrangement. The terminal arrangements typically comprise a rope terminal body whereto the rope is immovably fixed. There are alternative ways to fix the rope immovably to the rope terminal body. The rope terminal body, on the other hand, has also been fixed on the fixing base in alternative ways. In prior art document CN203794399U, the rope terminal body has been fixed via an elongated anchoring rod. The anchoring rod extends through a helical spring and its end is coupled with the end of the spring that is to be compressed by pull of the elongated anchoring rod towards a support member of the fixing base where the rope terminal takes support from.

In prior art, bushings have been used between the elongated anchoring rod and the ends of the helical spring. It has been noticed that a drawback of this solution is that they are prone to damage and/or displacement in case the tension in the ropes is slackened, for example when the car or counterweight is driven to be supported by its buffer. The damages and/or displacement of the bushings produce other issues such as deteriorated isolation, and thereby eventually ride comfort issues.

Related prior art has been disclosed in document WO2013/055308 A1. This document shows a terminal arrangement comprising a helical spring, a rod extending through the spring, and a washer mounted in an opening of a hitch plate.

### BRIEF DESCRIPTION OF THE INVENTION

The object of the invention is to introduce an improved terminal arrangement of a rope of an elevator. An object is to introduce a solution by which one or more of the above defined problems of prior art and/or problems discussed or implied elsewhere in the description can be solved. An object is particularly to introduce a rope fixing solution which is not sensitive to damage or displacement, e.g. in slack rope situation, and which can maintain its insulation properties good in long term use of the elevator. Thus, ride comfort can be maintained on a good level in long term use.

It is brought forward a new terminal arrangement of a rope of an elevator comprising an end section of a rope; a rope terminal body whereto the end section of the rope is immovably fixed; an elongated anchoring rod having a first end and a second end, the first end being in connection with the rope terminal body; a fixing base; a support member in connection with the fixing base (such as mounted thereon); a helical spring having a first end and a second end, and a hollow central space, the first end being supported against the support member, the anchoring rod being positioned to extend inside the hollow central space of the helical spring, the second end of the anchoring rod being coupled with the second end of the spring, and the helical spring is arranged be compressed by pull of the elongated anchoring rod towards the support member and to elastically resist pull of the elongated anchoring rod towards the support member. The anchoring arrangement comprises an elongated isolating sleeve for isolating the elongated anchoring rod and the helical spring from each other, which isolating sleeve is made of elastomer and positioned in the central space of the helical spring, and the elongated anchoring rod is positioned inside the isolating sleeve, the isolating sleeve surrounding the elongated anchoring rod and extending between the elongated anchoring rod and the helical spring most (i.e. more than half) of the length of the helical spring. With this solution one or more of the above mentioned objects can be achieved. Preferable further details are introduced in the following, which further details can be combined with the method individually or in any combination.

In a preferred embodiment, said elastomer is rubber.

In a preferred embodiment, the isolating sleeve surrounds the elongated anchoring rod and extends between the anchoring rod and the helical spring at least 80% of the length of the helical spring.

In a preferred embodiment, the support member comprises an opening through which the anchoring rod passes. Preferably, the support member is a metal plate aligned to extend along a plane and the elongated rod is at least substantially orthogonal to the plane.

In a preferred embodiment, the isolating sleeve isolates the anchoring rod and the support member from each other. The isolating sleeve surrounds the elongated anchoring rod and extends between the elongated anchoring rod and the opening of the support member, preferably most (i.e. more than half) of the length of the opening.

In a preferred embodiment, the isolating sleeve is longer than the helical spring.

In a preferred embodiment, the terminal arrangement comprises plurality of ropes the end sections of which are fixed as defined above, preferably the support member used in the fixing of the plurality of the end section of ropes being common in which case the support member comprises an individual opening for each of the elongated anchoring rods.

In a preferred embodiment, the second end of the anchoring rod is coupled with the second end of the helical spring by one or more coupler members mounted on the anchoring rod such that the helical spring is between the coupler members and the support member. Preferably, the coupler members comprise a detent member abutting the helical spring in longitudinal of the helical spring. Preferably, the detent member is a bushing surrounding the elongated anchoring rod and extending into the central space of the helical spring and between the elongated anchoring rod and the helical spring.

In a preferred embodiment, the arrangement comprises one or more isolating components isolating the anchoring rod and the helical spring from each other such that these are completely out of contact, said one or more isolating components including said isolating sleeve. Said one or more isolating components can include a bushing surrounding the elongated anchoring rod and extending into the central space of the helical spring and between the elongated anchoring rod and the helical spring. Preferably, said bushing extends between the elongated anchoring rod less than 20 % of the length of the helical spring. Preferably, said bushing is at the second end of the helical spring. Preferably, said bushing is made of material that has substantially higher modulus of elasticity (E) than the isolating sleeve. The bushing may also serve as a detent member as described elsewhere.

In a preferred embodiment, the isolating sleeve is tubular.

In a preferred embodiment, the elongated rod has circular cross-section.

In a preferred embodiment, the terminal arrangement comprises a first and a second compression member mounted on the rope terminal body, which delimit a compression gap between them, which compression gap is narrowable for causing compression on the end section of the rope placed in the compression gap. Preferably, the terminal body comprises a tapering nest accommodating an end section of rope and the compression members, said compression members being arranged to be moved to narrow the compression gap by wedging in the tapering nest.

In a preferred embodiment, the rope is a suspension rope of the elevator arranged to suspend the elevator car of the elevator.

In a preferred embodiment, the first end of the elongated anchoring rod is connected pivotally with the rope terminal body, and the rope is belt-shaped, and the pivot axis extend in width direction of the rope.

In a preferred embodiment, the rope is belt-shaped.

It is also brought forward a new elevator, which comprises an elevator car, a rope and a terminal arrangement as defined above or elsewhere in the application, such as in any of the preceding claims, fixing an end of the rope of the elevator to a fixing base. The rope is preferably a rope connected with the elevator car such as suspension rope or a compensation rope. The elevator can comprise such a terminal arrangement fixing each of the opposite ends of the rope. With this solution one or more of the above mentioned objects can be achieved. Preferable further details have been introduced above or in the following or in the claims, which further details can be combined with the method individually or in any combination.

In a preferred embodiment, the rope is a suspension rope of the elevator arranged to suspend the elevator car of the elevator.

In a preferred embodiment, the fixing base is for each end of the rope an elevator car, a counterweight or a stationary structure of the building where the elevator is installed.

In a preferred embodiment, the support member is mounted on the fixing base. Alternatively, it could form an integral part of the fixing base.

The elevator is preferably such that the car thereof is configured to serve two or more vertically displaced landings. The elevator is preferably configured to control movement of the car in response to signals from user interfaces located at landing(s) and/or inside the car so as to serve persons on the landing(s) and/or inside the elevator car. Preferably, the car has an interior space suitable for receiving a passenger or passengers, and the car can be provided with a door for forming a closed interior space.

### BRIEF DESCRIPTION OF THE DRAWINGS

In the following, the present invention will be described in more detail by way of example and with reference to the attached drawings, in which
Figure 1 illustrates a terminal arrangement according to a preferred embodiment.
Figure 2a illustrates an enlarged view of Figure 1.
Figure 2b illustrates a cross section C-C of Figure 2a.
Figure 3 illustrates preferred details of an elevator implementing the rope terminal arrangement of Figure 1.
Figure 4 illustrates preferred further details of the rope terminal arrangement of Figure 1.

The foregoing aspects, features and advantages of the invention will be apparent from the drawings and the detailed description related thereto.

### DETAILED DESCRIPTION

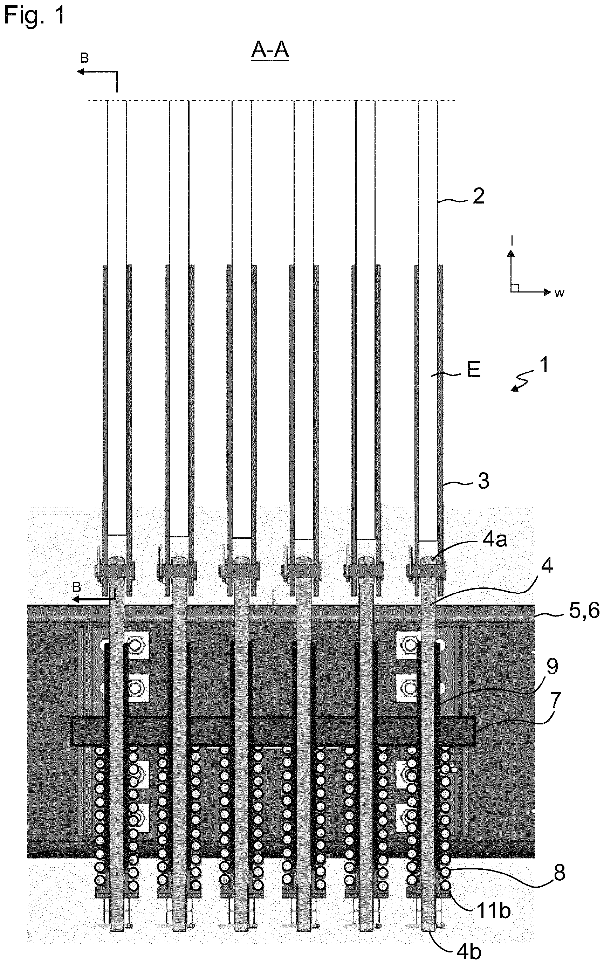

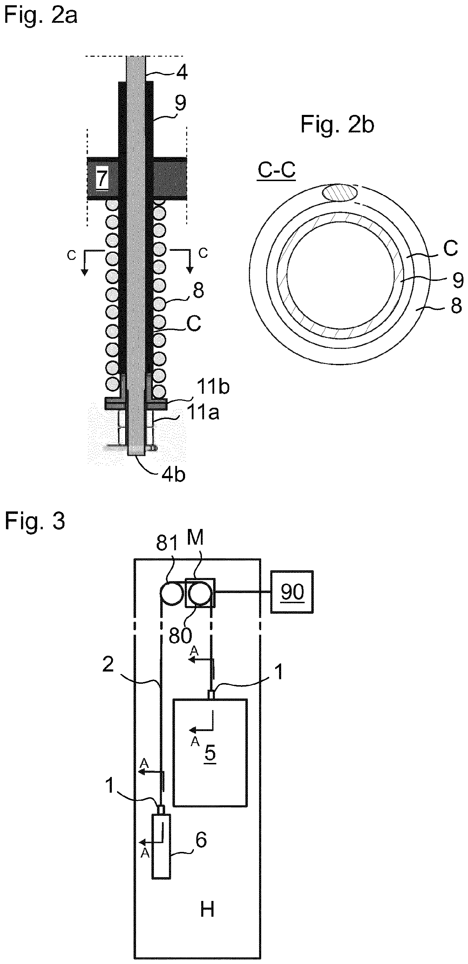

Figure 1 illustrates a terminal arrangement 1 of a rope of an elevator comprising ropes 2 fixed to a fixing base 5,6. Figure 2a illustrates an enlarged view of fixing of one of the ropes.

The terminal arrangement 1 comprises for each of the ropes 2 a rope terminal body 3 whereto the end section E of the rope 2 is immovably fixed, and an elongated anchoring rod 4 having a first end 4a and a second end 4a, the first end 4a being in connection with the rope terminal body 3.

The terminal arrangement 1 further comprises a support member 7 mounted on the fixing base 5,6. The support member 7 is in the presented embodiment shared by all of the ropes 2. The support member 7 comprises openings 7a. Each anchoring rod 4 passes through an opening 7a of the support member 7.

The terminal arrangement 1 further comprises a helical spring 8 having a first end and a second end, the first end being supported against the support member 7. The anchoring rod 4 is positioned to extend inside the helical spring 8 and the second end 4b of the anchoring rod 4 is coupled with the second end of the helical spring 8 by one or more coupler members 11a,11b mounted on the anchoring rod 4 such that the helical spring is between the coupler members 11a,11b and the support member 7, and arranged be compressed by pull of the elongated anchoring rod 4 towards the support member 7 and to elastically resist said pull of the elongated anchoring rod 4 towards the support member 7.

The anchoring arrangement 1 comprises an elongated isolating sleeve 9 for isolating the elongated anchoring rod 4 and the helical spring 8 from each other. The isolating sleeve 9 is made of elastomer and positioned in the central space C of the helical spring 8, and the elongated anchoring rod 4 is positioned inside the isolating sleeve 9 such that the isolating sleeve 9, in particular the wall thereof, surrounds the elongated anchoring rod 4 and extends between the elongated anchoring rod 4 and the helical spring 8 most (i.e. more than half) of the length of the helical spring 8. Said elastomer is preferably rubber. Rubber has very good wear resistance, as well as hardness and elasticity suitable for the intended use. Alternatively, other elastomer materials could be used. It is preferable that the isolating sleeve 9 surrounds the elongated anchoring rod 4 and extends between the anchoring rod 4 and the helical spring 8 a long distance to increase the effect thereof, most preferably at least 80% of the length of the helical spring 8.

As mentioned, the support member 7 comprises an opening 7a through which the anchoring rod 4 passes. The support member 7 is preferably a metal plate aligned to extend along a plane and the elongated rod is at least substantially orthogonal to the plane as illustrated. It can be rigidly mounted on the fixing base 5,6. Preferably, the isolating sleeve 9 isolates also the anchoring rod 4 and the support member 7 from each other. Thus, the same insulation component can be used to isolate the anchoring rod 4 from several components, whereby simplicity of the arrangement is facilitated. This is enabled by elongated shape of the isolating sleeve 9. The isolating sleeve is preferably longer than the helical spring 8. Thus, it can extend simply inside both the helical spring and the opening 7a of the support member 7. In the preferred embodiment, the isolating sleeve 9 surrounds the elongated anchoring rod 4 and extends between the elongated anchoring rod 4 and the opening 7a of the support member 7, preferably most (i.e. more than half) of the length of the opening 7a more preferably throughout the length of the opening (7a) as illustrated.

The arrangement comprises one or more isolating components between the anchoring rod 4 and the helical spring 8 isolating the anchoring rod 4 and the helical spring 8 from each other such that these are completely out of contact, said one or more isolating components including said isolating sleeve 9. The sleeve 9 provides isolation for the most of the length of the helical spring 8, however, at the second end of the spring 8 there can be additional isolation components that may also serve other functions such as detention of the spring.

As mentioned, it is preferable that the second end 4b of the anchoring rod 4 is coupled with the second end of the helical spring 8 by one or more coupler members 11a,11b mounted on the anchoring rod 4 such that the helical spring is between the coupler members 11a,11b and the support member 7. The coupler members 11a,11b preferably then comprise a detent member 11b abutting the spring in longitudinal of the spring 8 as illustrated in Figure 2a. In the presented preferred embodiment, the detent member 11b is a bushing surrounding the elongated anchoring rod 4 and extending into the central space C of the helical spring 8 and between the elongated anchoring rod 4 and the helical spring 8. Thus, in addition to detent function, the detent member 11b holds the helical spring 8 and the anchoring rod 4 positioned relative to each other in transverse direction of the helical spring 8 and the anchoring rod 4. For facilitating firm positioning, said bushing 11b is preferably made of material that has substantially higher coefficient of elasticity (E) than the isolating sleeve 9. Thereby said bushing 11b can also facilitate isolation at least to the extent that it does not allow these to contact each other. The bushing 11b can be made of polymer material, such as HD-polyethylene, for example. The elongated anchoring rod 4 has on its second end threads and the one or more coupler members 11a,11b mounted on the anchoring rod 4 preferably further comprise one or more threaded nut 11a screwed thereon to mount the detent member 11b on the anchoring rod 4 such that it is immovable further towards the second end 4a of the elongated anchoring rod 4. Preferably, said bushing 11b extends between the elongated anchoring rod (4) less than 20 % of the length of the helical spring (8) whereby main isolation is provided by the sleeve.

Figure 2b illustrates a preferred cross-section C-C of Figure 2a. In the presented embodiment, the sleeve 9 is tubular and the elongated rod has circular cross-section.

Figure 3 illustrates a preferred embodiment of an elevator implementing the terminal arrangement 1 described referring to Figures 1, 2a and 2b. The cross-section A-A is illustrated in Figure 1. The elevator comprises a hoistway H and an elevator car 5 and a counterweight 6 which are vertically movable in the hoistway H. The elevator comprises one or more ropes 2 that pass around one or more rope wheels 80,81 mounted in proximity of the upper end of the hoistway H. In the presented case, said one or more rope wheels include a drive wheel 80 rotated by a motor M for thereby moving the elevator car 5. The elevator further comprises a control unit 90 for automatically controlling rotation of the motor M, whereby the movement of the car 5 is also made automatically controllable.

The elevator comprises a terminal arrangement 1 fixing each end E of a rope 2 of the elevator to a fixing base 50,60. In the illustrated embodiment, the fixing base for one end of the rope 2 is, on the counterweight-side, a beam of the counterweight 6. The fixing base for one end of the rope 2 is, on the car-side, a beam of the car 6.

In the illustrated embodiment, the rope 2 is connected with the elevator car 5 with a suspension ratio 1:1. The rope ends are thus fixed directly to the loads, here the car 5 and the counterweight 6. The rope terminal 1 can however be implemented with different suspension ratios or elevator configurations. Alternatively, the rope ends could be fixed to a stationary structure of the building where the elevator is installed, which is the case if the car and counterweight are to be suspended with 2:1 ratio, for instance.

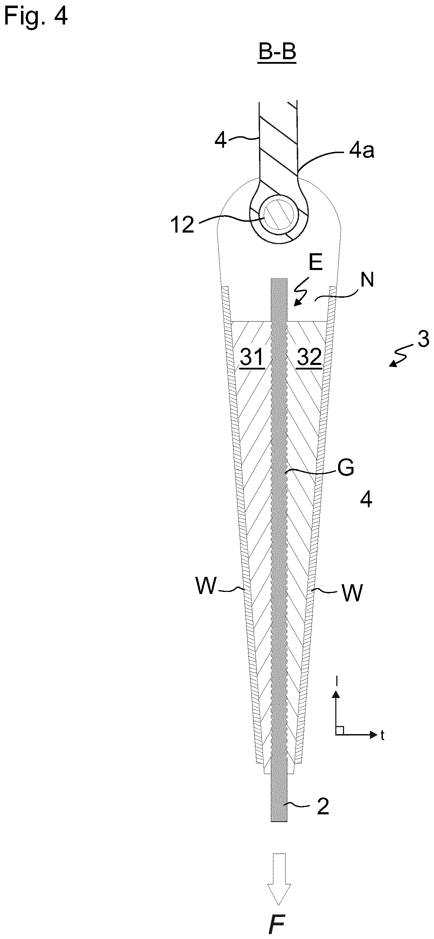

Figure 4 illustrates preferred details of the fixing of the end section E of the rope to the rope terminal body 3. The terminal arrangement 1 comprises a first and a second compression member 31,32 mounted on the rope terminal body 3, which first and a second compression member 31,32 delimit a compression gap G between them, which compression gap G is narrowable for causing compression on the end section E of the rope 2 placed in the compression gap G. The terminal body 3 comprises walls W delimiting a tapering nest N accommodating an end section E of the rope 2 and the compression members, said compression members 31,32 being arranged to be moved to narrow the compression gap G by wedging in the tapering nest N. The compression members 31,32 are then wedge members. Preferably, they are wedge shaped as illustrated.

In the preferred embodiment, the first end 4a of the elongated anchoring rod 4 is connected pivotally with the rope terminal body 3. In Figure 4, this is provided with a pivot pin comprised in the terminal body 3, the first end 4a of the elongated anchoring rod 4 being mounted pivotally on the pivot pin to pivot around the central axis thereof. When the rope is belt-shaped, the pivot axis preferably extends in width direction of the rope 2.

In a preferred embodiment, the rope is a suspension rope of the elevator arranged to suspend the elevator car and the counterweight of the elevator. However, the rope terminal arrangement can also be implemented for fixing one or more compensation ropes of an elevator.

In the preferred embodiments, an advantageous number and shape for the ropes 2 has been disclosed. However, the invention can be utilized with also other kind of ropes such as with ropes having round cross-section and other number of ropes.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A terminal arrangement (1) of a rope (2) of an elevator comprising
an end section (E) of a rope (2);
a rope terminal body (3) whereto the end section (E) of the rope (2) is immovably fixed;
an elongated anchoring rod (4) having a first end (4a) and a second end (4a), the first end (4a) being in connection with the rope terminal body (3);
a fixing base (5, 6);
a support member (7) in connection with the fixing base (5, 6);
a helical spring (8) having a first end and a second end, and a hollow central space (C), the first end being supported against the support member (7), the anchoring rod (4) being positioned to extend inside the hollow central space (C) of the helical spring (8), the second end (4b) of the anchoring rod (4) being coupled with the second end of the spring (8), and the helical spring (8) is arranged be compressed by pull of the elongated anchoring rod (4) towards the support member (7) and to elastically resist pull of the elongated anchoring rod (4) towards the support member (7),
**characterized in that** the anchoring arrangement (1) comprises an elongated isolating sleeve (9) for isolating the elongated anchoring rod (4) and the helical spring (8) from each other, which isolating sleeve (9) is made of elastomer and positioned in the central space (C) of the helical spring (8), and the elongated anchoring rod (4) is positioned inside the isolating sleeve (9), the isolating sleeve (9) surrounding the elongated anchoring rod (4) and extending between the elongated anchoring rod (4) and the helical spring (8) most of the length of the helical spring (8).

2. A terminal arrangement according to claim 1, wherein said elastomer is rubber.

3. A terminal arrangement according to any of the preceding claims, wherein the isolating sleeve (9) surrounds the elongated anchoring rod (4) and extends between the anchoring rod (4) and the helical spring (8) at least 80% of the length of the helical spring (8).

4. A terminal arrangement according to any of the preceding claims, wherein the support member (7) comprises an opening (7a) through which the anchoring rod (4) passes.

5. A terminal arrangement according to any of the preceding claims, wherein the isolating sleeve (9) isolates the anchoring rod (4) and the support member (7) from each other.

6. A terminal arrangement according to claims 4 or 5, wherein the isolating sleeve (9) surrounds the elongated anchoring rod (4) and extends between the elongated anchoring rod (4) and the opening (7a) of the support member (7).

7. A terminal arrangement according to any of the preceding claims, wherein the isolating sleeve (9) is longer than the helical spring (8).

8. A terminal arrangement according to any of the preceding claims, wherein the second end (4b) of the anchoring rod (4) is coupled with the second end of the helical spring (8) by one or more coupler members (11a,11b) mounted on the anchoring rod (4) such that the helical spring is between the coupler members (11a,11b) and the support member (7).

9. A terminal arrangement according to claim 8, wherein the coupler members (11a,11b) comprise a detent member (11b) abutting the helical spring (8) in longitudinal direction of the helical spring (8).

10. A terminal arrangement according to claim 9, wherein the detent member (11b) is a bushing surrounding the elongated anchoring rod (4) and extending into the central space (C) of the helical spring (8) and between the elongated anchoring rod (4) and the helical spring (8).

11. A terminal arrangement according to any of the preceding claims, wherein the arrangement comprises one or more isolating components (9, 11b) isolating the anchoring rod (4) and the helical spring (8) from each other such that these are completely out of contact, said one or more isolating components (9, 11b) including said isolating sleeve (9).

12. A terminal arrangement according to any of the preceding claims, wherein said one or more isolating components (9, 11b) include a bushing (11b) surrounding the elongated anchoring rod (4) and extending into the central space (C) of the helical spring (8) and between the elongated anchoring rod (4) and the helical spring (8).

13. A terminal arrangement according to any of the preceding claims 10 or 12, wherein said bushing (11b) is made of material that has substantially higher modulus of elasticity than the isolating sleeve (9).

14. A terminal arrangement according to any of the preceding claims, wherein the rope (2) is a suspension rope of the elevator arranged to suspend the elevator car (5) of the elevator.

15. An elevator, which comprises an elevator car (5) and a terminal arrangement (1) as defined in any of the preceding claims fixing an end (E) of a rope (2) of the elevator to a fixing base (5,6).

## Patentansprüche

1. Abschlussanordnung (1) eines Seils (2) eines Aufzugs, die einen Endabschnitt (E) eines Seils (2) umfasst;
einen Seilabschlusskörper (3), an dem der Endabschnitt (E) des Seils (2) unbewegbar befestigt ist;
eine längliche Verankerungsstange (4) mit einem ersten Ende (4a) und einem zweiten Ende (4a), wobei das erste Ende (4a) mit dem Seilabschlusskörper (3) in Verbindung ist;
eine Befestigungsbasis (5, 6);
ein Stützelement (7) in Verbindung mit der Befestigungsbasis (5, 6);
eine Schraubenfeder (8) mit einem ersten Ende und einem zweiten Ende sowie einem hohlen zentralen Raum (C), wobei das erste Ende gegen das Stützelement (7) gestützt ist, wobei die Verankerungsstange (4) positioniert ist, um sich in den hohlen zentralen Raum (C) der Schraubenfeder (8) zu erstrecken, wobei das zweite Ende (4b) der Verankerungsstange (4) an das zweite Ende der Feder (8) gekoppelt ist und die Schraubenfeder (8) angeordnet ist, durch ein Ziehen der länglichen Verankerungsstange (4) zum Stützelement (7) zusammengedrückt werden und einem Ziehen der länglichen Verankerungsstange (4) zum Stützelement (7) elastisch zu widerstehen,
**dadurch gekennzeichnet, dass** die Verankerungsanordnung (1) eine längliche Isolierhülse (9) zum Isolieren der länglichen Verankerungsstange (4) und der Schraubenfeder (8) gegeneinander umfasst, wobei die Isolierhülse (9) aus einem Elastomer besteht und im zentralen Raum (C) der Schraubenfeder (8) positioniert ist und die längliche Verankerungsstange (4) in der Isolierhülse (9) positioniert ist, wobei die Isolierhülse (9) die längliche Verankerungsstange (4) umgibt und sich über die Mehrheit der Länge der Schraubenfeder (8) zwischen der länglichen Verankerungsstange (4) und der Schraubenfeder (8) erstreckt.

2. Abschlussanordnung nach Anspruch 1, wobei das Elastomer Gummi ist.

3. Abschlussanordnung nach einem der vorhergehenden Ansprüche, wobei die Isolierhülse (9) die längliche Verankerungsstange (4) umgibt und sich über mindestens 80 % der Länge der Schraubenfeder (8) zwischen der Verankerungsstange (4) und der Schraubenfeder (8) erstreckt.

4. Abschlussanordnung nach einem der vorhergehenden Ansprüche, wobei das Stützelement (7) eine Öffnung (7a) umfasst, durch die die Verankerungsstange (4) verläuft.

5. Abschlussanordnung nach einem der vorhergehenden Ansprüche, wobei die Isolierhülse (9) die Verankerungsstange (4) und das Stützelement (7) gegeneinander isoliert.

6. Abschlussanordnung nach einem der Ansprüche 4 oder 5, wobei die Isolierhülse (9) die längliche Verankerungsstange (4) umgibt und sich zwischen der Verankerungsstange (4) und der Öffnung (7a) des Stützelements (7) erstreckt.

7. Abschlussanordnung nach einem der vorhergehenden Ansprüche, wobei die Isolierhülse (9) länger als die Schraubenfeder (8) ist.

8. Abschlussanordnung nach einem der vorhergehenden Ansprüche, wobei das zweite Ende (4b) der Verankerungsstange (4) mit einem oder mehreren Kopplerelementen (11a, 11b), die an der Verankerungsstange (4) montiert sind, an das zweite Ende der Schraubenfeder (8) gekoppelt ist, derart, dass sich die Schraubenfeder zwischen den Kopplerelementen (11a, 11b) und dem Stützelement (7) befindet.

9. Abschlussanordnung nach Anspruch 8, wobei die Kopplerelemente (11a, 11b) ein Arretierelement (11b) umfassen, das in Längsrichtung der Schraubenfeder (8) gegen die Schraubenfeder (8) stößt.

10. Abschlussanordnung nach Anspruch 9, wobei das Arretierelement (11b) eine Buchse ist, die die längliche Verankerungsstange (4) umgibt und sich in den zentralen Raum (C) der Schraubenfeder (8) und zwischen die längliche Verankerungsstange (4) und die Schraubenfeder (8) erstreckt.

11. Abschlussanordnung nach einem der vorhergehenden Ansprüche, wobei die Anordnung eine oder mehrere Isolierkomponenten (9, 11b) umfasst, die die Verankerungsstange (4) und die Schraubenfeder (8) gegeneinander isolieren, derart, dass diese keinerlei Kontakt aufweisen, wobei die eine oder die mehreren Isolierkomponenten (9, 11b) die Isolierhülse (9) beinhalten.

12. Abschlussanordnung nach einem der vorhergehenden Ansprüche, wobei die eine oder die mehreren Isolierkomponenten (9, 11b) eine Buchse (11b) beinhalten, die die längliche Verankerungsstange (4) umgibt und sich in den zentralen Raum (C) der Schraubenfeder (8) und zwischen die längliche Verankerungsstange (4) und die Schraubenfeder (8) erstreckt.

13. Abschlussanordnung nach einem der vorhergehenden Ansprüche 10 oder 12, wobei die Buchse (11b) aus einem Material besteht, das einen wesentlich höheren Elastizitätsmodul aufweist als die Isolierhülse (9).

14. Abschlussanordnung nach einem der vorhergehenden Ansprüche, wobei das Seil (2) ein Tragseil des Aufzugs ist, das angeordnet ist, die Aufzugskabine (5) des Aufzugs zu tragen.

15. Aufzug, der eine Aufzugskabine (5) und eine Abschlussanordnung (1) wie in einem der vorhergehenden Ansprüche definiert, die ein Ende (E) eines Seils (2) des Aufzugs an einer Befestigungsbasis (5, 6) befestigt, umfasst.

## Revendications

1. Agencement terminal (1) d'un câble (2) d'un ascenseur comprenant
une section d'extrémité (E) d'un câble (2) ;
un corps terminal de câble (3) sur lequel la section d'extrémité (E) du câble (2) est fixée de manière inamovible ;
une tige d'ancrage allongée (4) ayant une première extrémité (4a) et une seconde extrémité (4a), la première extrémité (4a) étant en liaison avec le corps terminal de câble (3) ;
une base de fixation (5, 6) ;
un organe de support (7) en liaison avec la base de fixation (5, 6) ;
un ressort hélicoïdal (8) ayant une première extrémité et une seconde extrémité, et un espace central creux (C), la première extrémité étant en appui contre l'organe de support (7), la tige d'ancrage (4) étant positionnée pour s'étendre à l'intérieur de l'espace central creux (C) du ressort hélicoïdal (8), la seconde extrémité (4b) de la tige d'ancrage (4) étant couplée avec la seconde extrémité du ressort (8), et le ressort hélicoïdal (8) est conçu pour être comprimé par la traction de la tige d'ancrage allongée (4) en direction de l'organe de support (7) et pour résister de manière élastique à la traction de la tige d'ancrage allongée (4) en direction de l'organe de support (7),
**caractérisé en ce que** l'agencement d'ancrage (1) comprend une gaine isolante allongée (9) pour isoler la tige d'ancrage allongée (4) et le ressort hélicoïdal (8) l'un de l'autre, laquelle gaine isolante (9) est constituée d'élastomère et positionnée dans l'espace central (C) du ressort hélicoïdal (8) et la tige d'ancrage allongée (4) est positionnée à l'intérieur de la gaine isolante (9), la gaine isolante (9) encerclant la tige d'ancrage allongée (4) et s'étendant entre la tige d'ancrage allongée (4) et le ressort hélicoïdal (8) sur la majeure partie de la longueur du ressort hélicoïdal (8) .

2. Agencement terminal selon la revendication 1, dans lequel ledit élastomère est du caoutchouc.

3. Agencement terminal selon l'une quelconque des revendications précédentes, dans lequel la gaine isolante (9) encercle la tige d'ancrage allongée (4) et s'étend entre la tige d'ancrage (4) et le ressort hélicoïdal (8) sur au moins 80 % de la longueur du ressort hélicoïdal (8).

4. Agencement terminal selon l'une quelconque des revendications précédentes, dans lequel l'organe de support (7) comprend une ouverture (7a) à travers laquelle passe la tige d'ancrage (4).

5. Agencement terminal selon l'une quelconque des revendications précédentes, dans lequel la gaine isolante (9) isole la tige d'ancrage (4) et l'organe de support (7) l'un de l'autre.

6. Agencement terminal selon les revendications 4 ou 5, dans lequel la gaine isolante (9) encercle la tige d'ancrage allongée (4) et s'étend entre la tige d'ancrage allongée (4) et l'ouverture (7a) de l'organe de support (7).

7. Agencement terminal selon l'une quelconque des revendications précédentes, dans lequel la gaine isolante (9) est plus longue que le ressort hélicoïdal (8).

8. Agencement terminal selon l'une quelconque des revendications précédentes, dans lequel la seconde extrémité (4b) de la tige d'ancrage (4) est couplée avec la seconde extrémité du ressort hélicoïdal (8) par un ou plusieurs organes coupleurs (11a, 11b) montés sur la tige d'ancrage (4) de sorte que le ressort hélicoïdal est entre les organes coupleurs (11a, 11b) et l'organe de support (7).

9. Agencement terminal selon la revendication 8, dans lequel les organes coupleurs (11a, 11b) comprennent un organe de détente (11b) en butée contre le ressort hélicoïdal (8) dans la direction longitudinale du ressort hélicoïdal (8).

10. Agencement terminal selon la revendication 9, dans lequel l'organe de détente (11b) est une douille encerclant la tige d'ancrage allongée (4) et s'étendant dans l'espace central (C) du ressort hélicoïdal (8) et entre la tige d'ancrage allongée (4) et le ressort hélicoïdal (8).

11. Agencement terminal selon l'une quelconque des revendications précédentes, dans lequel l'agencement comprend un ou plusieurs éléments isolants (9, 11b) isolant la tige d'ancrage (4) et le ressort hélicoïdal (8) l'un de l'autre de sorte que ceux-ci sont complètement hors de contact, lesdits un ou plusieurs éléments isolants (9, 11b) incluant ladite gaine isolante (9).

12. Agencement terminal selon l'une quelconque des revendications précédentes, dans lequel lesdits un ou plusieurs éléments isolants (9, 11b) incluent une douille (11b) encerclant la tige d'ancrage allongée (4) et s'étendant dans l'espace central (C) du ressort hélicoïdal (8) et entre la tige d'ancrage allongée (4) et le ressort hélicoïdal (8).

13. Agencement terminal selon l'une quelconque des revendications 10 ou 12 précédentes, dans lequel ladite douille (11b) est constituée d'un matériau qui possède un module d'élasticité sensiblement plus élevé que la gaine isolante (9).

14. Agencement terminal selon l'une quelconque des revendications précédentes, dans lequel le câble (2) est un câble de suspension de l'ascenseur conçu pour suspendre la cabine d'ascenseur (5) de l'ascenseur.

15. Ascenseur, qui comprend une cabine d'ascenseur (5) et un agencement terminal (1) tel que défini selon l'une quelconque des revendications précédentes fixant une extrémité (E) d'un câble (2) de l'ascenseur à une base de fixation (5, 6) .
